(19) **Europäisches Patentamt / European Patent Office / Office européen des brevets**

(11) **EP 2 993 207 B1**

(12) **EUROPEAN PATENT SPECIFICATION**

(45) Date of publication and mention of the grant of the patent:
**29.05.2019 Bulletin 2019/22**

(21) Application number: **14846662.6**

(22) Date of filing: **04.09.2014**

(51) Int Cl.:
*C08F 4/6592* *(2006.01)*  *C08L 25/04* *(2006.01)*
*C08L 51/04* *(2006.01)*  *C08F 279/02* *(2006.01)*
*C08L 9/00* *(2006.01)*

(86) International application number:
**PCT/JP2014/073297**

(87) International publication number:
**WO 2015/041059 (26.03.2015 Gazette 2015/12)**

(54) **RUBBER COMPOSITION AND STYRENE-BASED RESIN COMPOSITION USING SAME**

KAUTSCHUKZUSAMMENSETZUNG UND HARZZUSAMMENSETZUNG AUF STYROLBASIS DAMIT

COMPOSITION DE CAOUTCHOUC ET COMPOSITION DE RÉSINE À BASE DE STYRÈNE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2013 JP 2013191780**

(43) Date of publication of application:
**09.03.2016 Bulletin 2016/10**

(73) Proprietor: **UBE Industries, Ltd.**
**Ube-shi, Yamaguchi 755-8633 (JP)**

(72) Inventors:
• **OKABE Yasuyoshi**
**Ichihara-shi**
**Chiba 290-0045 (JP)**
• **SHIBANO Yuki**
**Ichihara-shi**
**Chiba 290-0045 (JP)**
• **SAKAGUCHI Toshiyuki**
**Ichihara-shi**
**Chiba 290-0045 (JP)**

(74) Representative: **AOMB Polska Sp. z.o.o.**
**Ul. Emilii Plater 53**
**21st Floor**
**00-113 Warsaw (PL)**

(56) References cited:
EP-A1- 1 443 078    JP-A- H0 570 628
JP-A- H10 139 835    JP-A- H10 152 535
JP-A- H10 273 574    JP-A- S62 179 548
JP-A- 2004 250 671    JP-A- 2004 250 679
JP-A- 2004 250 691    JP-A- 2004 315 562
JP-A- 2007 063 308    JP-A- 2008 274 304

• DATABASE WPI Week 200480 Thomson Scientific, London, GB; AN 2004-807206 XP002766783, & JP 2004 315562 A (UBE IND LTD) 11 November 2004 (2004-11-11)
• DATABASE WPI Week 200915 Thomson Scientific, London, GB; AN 2009-B41762 XP002766784, & JP 2009 001820 A (UBE IND LTD) 8 January 2009 (2009-01-08)
• DATABASE WPI Week 200880 Thomson Scientific, London, GB; AN 2008-N75368 XP002766785, & JP 2008 274304 A (UBE IND LTD) 13 November 2008 (2008-11-13)

**EP 2 993 207 B1**

**Description**

**TECHNICAL FIELD**

The present invention relates to a rubber composition in which solution viscosity and cold flow are improved, and relates to a styrene resin composition using the rubber.

**BACKGROUND ART**

It is found that polybutadienes having a micro structure of high cis-structure with appropriate 1,2-structure and few trans-structure, and having high linearity (linear property) of the molecule are produced by polymerizing butadiene using a polymerization catalyst which consist of a metallocene complex of a vanadium metal compound, an ionic compound of non-coordinating anion and cation, and/or an alumoxane (JP 9-291108 A, JP 9-324009 A, JP 9-302035 A). Because of having superior properties, the polybutadienes are examined to be applied to high-impact polystyrene resins or tires.

However, high linearity (linear property) leads to increase a solution viscosity and that causes a problem in handling. Since the polybutadiene having high linearity also shows a relatively-high cold flow, the improvement in storage and transportation is required in some cases.

In order to solve the problem, it is found that properties such as cold flow are improved by denaturing a polybutadiene in the presence of a metal catalyst.

JP 3982203 B discloses a modified polybutadiene obtained by modifying raw polybutadiene having the following characteristics in the presence of a transition metal catalyst: the ratio (Tcp / $ML_{1+4}$) is 2.5 or more, wherein Tcp is 5% toluene solution viscosity measured at 25°C and ($ML_{1+4}$) is Mooney viscosity measured at 100°C.

Further, WO 2011/102518 discloses a polybutadiene having a controlled microstructure, a narrow molecular weight distribution, minimal gel content, and a low APHA color, a modified polybutadiene, producing methods for both, and a rubber-reinforced styrene resin composition using the same. The polybutadiene described therein has the ratio (Tcp/$ML_{1+4}$) being at least 2.0, the molecular weight distribution (Mw/Mn) being at most 2.80 (wherein Mw is weight average molecular weight and Mn is number average molecular weight), the gel content being at most 0.06 wt%, and the APHA color being at most 20.

**SUMMARY OF THE INVENTION**

However, the above-mentioned method causes decrease in quality of the polybutadiene because of increase in gel by increase of a side reaction, and causes increase in cost because of complicating production process. A demand for a new and easy-to-use polybutadiene in which solution viscosity and cold flow are improved without depending on the denaturation technique.

Thus, the purpose of the present invention is to provide a rubber composition in which solution viscosity and cold flow are improved, and to provide a styrene resin composition using the rubber composition.

Accordingly, the present invention relates to a rubber composition, including:

20 to 90 wt% of a polybutadiene (A) produced by a metallocene catalyst, having:

(a1) a cis-1,4-structure in microstructure being 65 to 95 mol%,

(a2) a vinyl-1,2-structure in microstructure being 4 to 30 mol%, and

(a3) a weight average molecular weight (Mw) being $2x10^5$ to $1x10^6$; and

10 to 80 wt% of another polybutadiene (B) having:

(b1) a Mooney viscosity ($ML_{1+4, 100°C}$) being 27.1 to 60,

(b2) a 5 wt% styrene solution viscosity (St-cp) being 37 to 110,

(b3) a ratio (St-cp/$ML_{1+4}$) of the 5 wt% styrene solution viscosity to the Mooney viscosity being 1.37 to 2.5,

(b4) a number average molecular weight (Mn) in terms of polystyrene being $1.22x10^5$ to $3x10^5$;

(b5) a weight average molecular weight (Mw) being $3.68 \times 10^5$ to $6 \times 10^5$; and

(b6) a molecular weight distribution (Mw/Mn) being 1.5 to 3.03

wherein a total of the polybutadiene (A) and the polybutadiene (B) is 60 to 100 wt%.

The present invention relates to a styrene resin composition including the above-mentioned rubber composition and a styrene resin.

According to the present invention, a rubber composition in which solution viscosity and cold flow are improved, and a styrene resin composition using the rubber can be provided.

## DETAILED DESCRIPTION OF THE INVENTION

### Polybutadiene (A)

The vinyl-1,2-structure content of the polybutadiene (A) is 4 to 30 mol%, is preferably 5 to 25 mol%, and is more preferably 7 to 15 mol%. The cis-1,4-structure content of the polybutadiene (A) is 65 to 95 mol%, is preferably 70 to 95 mol%, and is more preferably 70 to 92 mol%. The trans-1,4-structure content of the polybutadiene (A) is 5 mol% or less, is preferably 4.5 mol% or less, and is more preferably 0.5 to 4 mol%. When the contents of the cis-1,4-structure in microstructure and the vinyl-1,2-structure are outside of the ranges, The reactivity (graft reaction, cross-linking reactivity, etc.) of the polybutadiene (A) is not appropriate, and the rubber property is also deteriorated when it is used as an addictive or the like, and thus the property balance and appearance are affected.

In the present invention, it is particularly important to use a polybutadiene (A) having the above-mentioned microstructure as a raw material. The properties are significantly improved as compared with using another diene rubber.

The molecular weight of the polybutadiene (A) is preferably in a following range as a molecular weight in terms of polystyrene. That is, the number average molecular weight (Mn) is preferably $10 \times 10^4$ to $40 \times 10^4$, is more preferably $15 \times 10^4$ to $30 \times 10^4$. The weight average molecular weight (Mw) is $2 \times 10^5$ to $1 \times 10^6$, and is preferably is $3 \times 10^5$ to $8 \times 10^5$. When the molecular weight of the polybutadiene (A) is more than the above-mentioned range, a problem in increasing gel may be occurred, whereas when the molecular weight of polybutadiene (A) is less than the above-mentioned range, productivity may be decreased.

The molecular weight distribution (Mw/Mn) of the polybutadiene (A) is preferably 2.80 or less, is more preferably 1.50 to 2.60, and is further preferably 1.80 to 2.40. By controlling the molecular weight distribution within the above-mentioned range, the rubber particle diameter in a case where the polybutadiene (A) is used for a styrene-resin modifier can be easily controlled, and also a particle diameter size can be uniformed. By controlling the molecular weight distribution within such a range, the gross (gross property) and the graft property are improved, and further the impact resistance is improved.

The gel content in the polybutadiene (A) is preferably 0.060 wt% or less, is more preferably 0.020 wt% or less, and further preferably 0.0001 to 0.010 wt%. The control of the gel content in the polybutadiene (A) within such a low range prevents a filter for removing a gel which is undissolved when being dissolved in a solvent, from possibly being clogged as quickly as possible. Also, a fish eye problem can be prevented by reducing the gel content in the polybutadiene (A).

The intrinsic viscosity $[\eta]$ in toluene measured at 30°C which can be used for an index of the molecular weight of the polybutadiene (A) is preferably 0.1 to 10, and is more preferably 1 to 8.

The cold flow rate (CF) of the polybutadiene (A) is preferably 1.0 g/10min or less, is more preferably 0.9 g/10min or less, and further preferably 0.8 g/10min or less.

The 5 wt% styrene solution viscosity (St-cp) of the polybutadiene (A) which is measured at 25°C is preferably 20 to 400, and is more preferably 20 to 300. The ratio (St-cp/$ML_{1+4}$) of the 5 wt% styrene solution viscosity (St-cp) of the polybutadiene (A) to the Mooney viscosity ($ML_{1+4}$) at 100°C is preferably 9 or less, is more preferably 1.0 to 6.0, and is further preferably 1.0 to 5.0.

### Method of producing polybutadiene (A)

The polybutadiene (A) can be produced, for example, by polymerizing butadiene using a catalyst including (A1) a metallocene complex of a transition metal compound, and (A2) an ionic compound of a non-coordinating anion and a cation and/or an alumoxane.

Alternatively, the polybutadiene (A) can be produced by polymerizing the butadiene using a catalyst including (A1) a metallocene complex of a transition metal compound, (A2) an ionic compound of a non-coordinating anion and a cation, (A3) an organometallic of a group 1 to 3 element in the Periodic Table, and (A4) water.

Examples of the metallocene complex of a transition metal compound described in the above-mentioned (A1) component include metallocene complexes of a transition metal compound of group 4 to 8 in the Periodic Table. More specifically, examples thereof include: metallocene catalysts (e.g. including $CpTiCl_3$) of a transition metal compound of group 4 in the Periodic Table such as titanium and zirconium; metallocene catalysts of a transition metal compound of group 5 in the Periodic Table such as vanadium, niobium, and tantalum; metallocene catalysts of a transition metal compound of group 6 in the Periodic Table such as chromium; and metallocene catalysts of a transition metal compound of group 8 in the Periodic Table such as cobalt and nickel. Above all, a metallocene catalyst of a transition metal compound of group 5 in the Periodic Table is preferably used.

Examples of the metallocene catalyst of a transition metal compound of group 5 in the Periodic Table include compounds which are represented by general formulae such as (1) $RM \cdot La$, (2) $RnMX_{2-n} \cdot La$, (3) $RnMX_{3-n} \cdot La$, (4) $RMX_3 \cdot La$, (5) $RM(O)X_2 \cdot La$, and (6) $RnMX_{3-n}(NR')$ (in the formulae, n is 1 or 2 and a is 0, 1 or 2). Above all, a compound represented by general formula of $RM \cdot La$, $RMX_3 \cdot La$, or $RM(O)X_2 \cdot La$ is preferable.

M is a transition metal compound of group 5 in the Periodic Table, and is specifically vanadium (V), niobium (Nb) or tantalum (Ta). The vanadium is preferable.

R shows cyclopentadienyl group, a substituted cyclopentadienyl group, indenyl group, a substituted indenyl group, fluorenyl group or a substituted fluorenyl group.

Examples of the substituted group in the substituted cyclopentadienyl group, the substituted indenyl group, and the substituted fluorenyl group include: linear aliphatic hydrocarbon groups or branched aliphatic hydrocarbon groups such as methyl, ethyl, propyl, i-propyl, n-butyl, i-butyl, sec-butyl, t-butyl and hexyl; aromatic hydrocarbon groups such as phenyl, tolyl, naphthyl, and benzyl; and hydrocarbon groups containing a silicon atom such as trimethylsilyl. Further, examples of the substituted group include groups in which a cyclopentadienyl ring is bonded to a part of X each other via a cross-linked group such as dimethylsilyl, dimethyl methylene, methyl phenyl methylene, diphenyl methylene, ethylene, and a substituted ethylene.

X represents hydrogen, a halogen, a hydrocarbon group with a carbon number of 1 to 20, an alkoxy group or an amino group. X may be all the same group or may be a different group.

Specific examples of the halogen include fluorine atom, chlorine atom, bromine atom, and iodine atom.

Specific examples of the hydrocarbon group with the carbon number of 1 to 20 include: linear aliphatic hydrocarbon groups or branched aliphatic hydrocarbon groups such as methyl, ethyl, propyl, i-propyl, n-butyl, i-butyl, sec-butyl, t-butyl and hexyl; and aromatic hydrocarbon groups such as phenyl, tolyl, naphthyl, and benzyl. Further, hydrocarbon groups containing a silicon atom such as trimethylsilyl are included. Above all, methyl, benzyl, and trimethylsilylmethyl are preferable.

Specific examples of the alkoxy group include methoxy, ethoxy, phenoxy, propoxy, and butoxy. Further, the alkoxy group may include amyloxy, hexyloxy, octyloxy, 2-ethylhexyloxy, and methylthio.

Specific examples of the amino group include dimethylamino, diethylamino, diisopropyl amino, and bistrimethylsilyl amino.

Above all, X is preferably hydrogen, fluorine atom, chlorine atom, bromine atom, methyl, ethyl, butyl, methoxy, ethoxy, dimethylamino, diethylamino, and bistrimethylsilyl amino.

L is a Lewis base and a general inorganic or organic compound having Lewis basicity which can be coordinated with metal. Above all, compounds having no active hydrogen are particularly preferable. Specific examples include ethers, esters, ketones, amines, phosphines, silyloxy compounds, olefins, dienes, aromatic compounds, and alkynes.

NR' is an imide group, and R' is a hydrocarbon substituting group with the carbon number of 1 to 25. Specific example of R' include; linear aliphatic hydrocarbon groups or branched aliphatic hydrocarbon groups such as methyl, ethyl, propyl, i-propyl, n-butyl, i-butyl, sec-butyl, t-butyl and hexyl; and aromatic hydrocarbon groups such as phenyl, tolyl, naphthyl, benzyl, 1-phenylethyl, 2-phenyl-2-propyl, 2,6-dimethylphenyl, and 3,4-dimethylphenyl. Further, hydrocarbon groups containing a silicon atom such as trimethylsilyl are included.

Among these metallocene catalysts of a transition metal compound of group 5 in the Periodic Table, vanadium compounds in which M is vanadium are particularly preferable. For example, $RV \cdot La$, $RVX \cdot La$, $R_2V \cdot La$, $RVX_2 \cdot La$, $R_2VX \cdot La$, $RVX_3 \cdot La$, $RV(O)X_2 \cdot La$ are preferable, and $RV \cdot La$, $RVX_3 \cdot La$, $RV(O)X_2 \cdot La$ are more preferable.

Specific examples of the compound shown in $RMX_3 \cdot La$ include following (i) to (xvi).

(i) cyclopentadienyl vanadium trichloride and monosubstituted cyclopentadienyl vanadium trichlorides (e.g. methylcyclopentadienyl vanadium trichloride, ethylcyclopentadienyl vanadium trichloride, propylcyclopentadienyl vanadium trichloride, and isopropylcyclopentadienyl vanadium trichloride)

(ii) 1,2-disubstituted cyclopentadienyl vanadium trichlorides (e.g. (1,2-dimethylcyclopentadienyl) vanadium trichloride)

(iia) 1,3-disubstituted cyclopentadienyl vanadium trichlorides (e.g. (1,3-dimethylcyclopentadienyl) vanadium trichloride)

(iii) 1,2,3-trisubstituted cyclopentadienyl vanadium trichlorides (e.g. (1,2,3-trimethylcyclopentadienyl) vanadium trichloride)

(iv) 1,2,4-trisubstituted cyclopentadienyl vanadium trichlorides (e.g. (1,2,4-trimethylcyclopentadienyl) vanadium trichloride)

(v) tetrasubstituted cyclopentadienyl vanadium trichlorides (e.g. (1,2,3,4-tetramethylcyclopentadienyl) vanadium trichloride)

(vi) pentasubstituted cyclopentadienyl vanadium trichlorides (e.g. (pentamethylcyclopentadienyl) vanadium trichloride)

(vii) indenyl vanadium trichloride

(viii) substituted indenyl vanadium trichlorides (e.g. (2-methylindenyl) vanadium trichloride)

(ix) monoalkoxides, dialkoxides, and trialkoxides in which a chlorine atom of the compounds of (i) to (viii) are substituted with an alkoxy group (e.g. cyclopentadienyl vanadium tri-t-butoxide, cyclopentadienyl vanadium tri-i-propoxide, and cyclopentadienyl vanadium dimethoxy chloride)

(x) methyl bodies in which a chlorine atom in (i) to (ix) is substituted with methyl group

(xi) compounds obtained by bonding R to X with a hydrocarbon group or silyl group (e.g. (t-butyramide)dimethyl ($\eta^5$-cyclopentadienyl)silane vanadium dichloride)

(xii) methyl bodies in which a chlorine atom in (xi) is substituted with methyl group

(xiii) monoalkoxy bodies or dialkoxy bodies in which a chlorine atom in (xi) is substituted with an alkoxy group

(xiv) compounds obtained by substituting monochloro bodies in (xiii) with methyl group

(xv) amide bodies in which a chlorine atom in (i) to (viii) is substituted with amide group (e.g. cyclopentadienyl tris(diethylamide) vanadium and cyclopentadienyl tris(i-propyl amide) vanadium)

(xvi) methyl bodies in which a chlorine atom in (xv) is substituted with an alkoxy group

Specific examples of the compound shown in the above-mentioned $RM(O)X_2$ include following (a) to (d).

(a) cyclopentadienyloxo vanadium dichloride, methylcyclopentadienyloxo vanadium dichloride, benzylcyclopentadienyloxo vanadium dichloride, (1,3-dimethylcyclopentadienyl)oxo vanadium dichloride and mehyl bodies in which a chlorine atom of these compounds is substituted with methyl group

(b) compounds obtained by bonding R to X with a hydrocarbon group or silyl group (e.g. amide chloride bodies such as (t-butyramide)dimethyl ($\eta^5$-cyclopentadienyl) silaneoxo vanadium dichloride or methyl bodies in which a chlorine atom of these compounds is substituted with methyl body)

(c) cyclopentadienyloxo vanadium dimethoxide, cyclopentadienyloxo vanadium i-propoxide and methyl bodies in which a chlorine atom of these compound is substituted with methyl group

(d) (cyclopentadienyl)bis(diethylamide)oxo vanadium

Examples of the non-coordinating anion among the ionic compound of the non-coordinating anion and cation which is (A2) component include tetra(phenyl) borate, tetra(fluorophenyl) borate, tetrakis(difluorophenyl) borate, tetrakis(trifluorophenyl) borate, tetrakis(tetrafluorophenyl) borate, and tetrakis(pentafluorophenyl) borate. On the other hand, examples of the cation include carbonium cations, oxonium cations, ammonium cations, phosphonium cations, and ferrocenium cations having a transition metal.

Specific examples of the carbonium cation include trisubstituted carbonium cations such as triphenyl carbonium cation and trisubstituted phenyl carbonium cations. Specific examples of the trisubstituted phenyl carbonium cation include tri(methylphenyl) carbonium cation and tri(dimethylphenyl) carbonium cation.

Specific examples of the ammonium cation include: trialkyl ammonium cations such as trimethyl ammonium cation, triethyl ammonium cation, tripropyl ammonium cation, tributyl ammonium cation, and tri(n-butyl) ammonium cation; N,N-dialkyl anilinium cations such as N,N-dimethyl anilinium cation and N,N-diethyl anilinium cation; and dialkyl ammonium cations such as di(i-propyl) ammonium cation.

Specific examples of the phosphonium cation include triaryl phosphonium cations such as triphenyl phosphonium cation.

As the ionic compound, a compound by combining an optionally selected anion and cation respectively from the above-exemplified non-coordinating anion and cation can be preferably used.

Above all, as the ionic compound, triphenyl carbonium tetrakis(pentafluorophenyl) borate, triphenyl carbonium tetrakis(fluorophenyl) borate, N,N-dialkylanilinium tetrakis(pentafluorophenyl) borates, and 1,1'-dimethyferrocenium tetrakis(pentafluorophenyl) borate are preferable. The ionic compound may be used alone, or may be used in combination with two or more.

Further, an alumoxane may be used for the (A2) component. Example of the alumoxane include chain alumoxanes or cyclic alumoxanes obtained by bringing an organic alminium compound into contact with a condensation agent, which is shown in general formula $(-Al(R')O)n$ (R' shows a hydrocarbon group with a carbon number of 1 to 10 and includes groups a part of which is substituted with halogen atom and/or an alkoxy group. n is polymerization degree that is 5 or more and is preferably 10 or more). Examples of R' include methyl group, ethyl group, propyl group, and isobutyl group and the methyl group is preferable. Example of the organic alminium compounds that are used for the raw material of alumoxane include trialkylaluminum such as trimethylaluminum, triethylaluminum, and triisobutylaluminum, and mixtures thereof.

Alumoxanes obtained by using a mixture of trimethylaluminum and tributylaluminum as the raw material can be preferably used.

Examples of the condensation agent include water as a typical agent, otherwise include optional agents by which the condensation reaction of the trimethylaluminum can occur, that are, for example, absorbed water such as mineral and diols.

An organometallic component of a group 1 to 3 element in the Periodic Table as the (A3) component may further be combined with the (A1) component and (A2) component to polymerize a conjugated diene. The addition of the (A3) component generates the effect of increasing the polymerization activity. Examples of the organometallic component of a group 1 to 3 element in the Periodic Table include organic aluminum compounds, organic lithium compounds, organic magnesium compounds, organic zinc compounds, and organic boron compounds.

Specific examples of the compound include methyl lithium, butyl lithium, phenyl lithium, bistrimethylsilylmethyl lithium, dibutyl magnesium, dihexyl magnesium, diethyl zinc, trimethyl aluminum, triethyl aluminum, triisobutyl aluminum, trifluorinated boron, and triphenyl boron.

Further, organometallic halogen compounds such as ethylmagnesium chloride, dimethylaluminum chloride, diethylaluminum chloride, sesquiethylaluminum chloride, and ethylaluminum dichloride; and hydrogenation organometallic compounds such as diethylaluminum hyderide, sesquiethylaluminum hydride are included. The organometallic compound may be used alone, or may be used in combination with two or more.

As the combination of the above-mentioned catalyst components, combinations of $RMX_3$ such as cyclopentadienyl vanadium trichloride ($CpVCl_3$) or $RM(O)X_2$ such as cyclopentadienyloxo vanadium dichloride ($CpV(O)Cl_2$) as the (A1) component, triphenyl carbenium tetrakis(pentafluorophenyl) borate as the (A2) component, and a trialkylaluminum such as triethyl aluminum as the (A3) component is preferable.

When the ionic compound is used for the (A2) component, the above-mentioned alumoxane may be combined as the (A3) component.

Since the compounding ratio of each component is different depending on various conditions and combinations, the molar ratio (A2)/(A1) of the metallocene complex as the (A1) component to the alumoxane as the (A2) component is preferably 1 to 100000, and is more preferably 10 to 10000.

The molar ratio (A2)/(A1) of the metallocene complex as the (A1) component to the ionic component as the (A2) component is preferably 0.1 to 10 and is more preferably 0.5 to 5.

The molar ratio (A3)/(A1) of the metallocene complex as the (A1) component to the organometallic component as the (A3) component is preferably 0.1 to 10000 and is more preferably 10 to 1000.

Further, it is preferable to add water as the (A4) component. The molar ratio (A3)/(A4) of the organometallic compound as the (A3) component to the water as the (A4) component is preferably 0.66 to 5 and is more preferably 0.7 to 3.0.

The adding order of the above-mentioned catalyst components is not limited in particular. Also, at the time of the polymerization, hydrogen can be coexist as needed. The existing hydrogen amount is preferably 500 mmol or less, or 12 L or less at 20°C under 1 atm with respect to 1 mol of butadiene, and is more preferably 50 mmol or less, or 1.2 L or less at 20°C under 1 atm.

Note that, other than butadiene monomer, conjugated dienes such as isoprene, 1,3-pentadiene, 2-ethyl-1,3-butadiene, 2,3-dimethyl butadiene, 2-methylpentadiene, 4-methylpentadiene, and 2,4-hexadiene; acyclic monoolefins such as ethylene, propylene, butene-1, butene-2, isobutene, pentene-1,4-methylpentene-1, hexene-1, and octene-1; cyclic monoolefins such as cyclopentene, cyclohexene, and norbornene; and/or aromatic vinyl compounds such as styrene and $\alpha$-methylstyrene; and non-conjugate diolefins such as dicyclopentadiene, 5-ethylidene-2-norbornene, and 1,5-hexadiene can be included in a small amount.

The polymerization method is not limited in particular, and solution polymerization or bulk polymerization using 1,3-butadiene itself as the polymerization solvent can be applied. Examples of the polymerization solvent include aromatic hydrocarbons such as toluene, benzene and xylene; aliphatic hydrocarbons such as n-hexane, butane, heptane and pentane; alicyclic hydrocarbons such as cyclopentane and cyclohexane; olefin hydrocarbons such as 1-butene and 2-butene; hydrocarbon type solvents such as mineral spirits, solvent naphtha, and kerosene; and halogenated hydrocarbon solvents such as methylene chloride.

Further, a preliminary polymerization is preferably performed at a predetermined temperature using the above-mentioned catalyst. The preliminary polymerization can be performed by gas phase method, by solution method, by slurry method, or by bulk method. The solid or solution obtained by the preliminary polymerization can be used for the main polymerization after the separation, or the main polymerization can be performed continuously without separation.

The polymerization temperature is preferably in a range of -100 to 200°C, and is more preferably in a range of -50 to 120°C. The polymerization time is preferably in a range of two minutes to 12 hours, and is more preferably in a range of five minutes to six hours.

After the polymerization for a predetermined time, a polymerization terminator is added to stop the polymerization. Then, the pressure inside the polymerization tank is discharged as necessary and post-treatments such as washing step and drying step are performed.

Note that, in order to obtain a polybutadiene, the dispersibility of the added polymerization terminator need to be improved. By improving the dispersibility of the polymerization terminator, the polymerization catalyst and the polymerization terminator are reacted efficiently, thereby allowing the polymerization catalyst to be deactivated.

The polybutadiene (A) may be denatured. Specific examples include branched polybutadienes by a transition metal catalyst for denaturation. However, since the denaturation complicates the process of producing the polybutadiene (A) and may lead to the deterioration in quality due to the increase of gel caused by the increase of the side reaction, an undenatured polybutadiene (A) is preferably used.

**Polybutadiene (B)**

The cis-1,4-structure content of another polybutadiene (B) to be blended with the polybutadiene (A) is preferably 90 mol% or more, is more preferably 95 mol% or more, and is further preferably 95 mol% or more. When the cis-1,4-structure content is beyond the above-mentioned range, the impact resistance of the rubber composition may be decreased.

The molecular weight of the polybutadiene (B) is preferably in the following range as a molecular weight in terms of polystyrene. That is, the number average molecular weight (Mn) is preferably $1 \times 10^5$ to $3 \times 10^5$ and is more preferably $1 \times 10^5$ to $2.5 \times 10^5$. The weight average molecular weight (Mw) is preferably $2 \times 10^5$ to $6 \times 10^5$, and is more preferably $3 \times 10^5$ to $6 \times 10^5$. When the molecular weight of the polybutadiene (B) is more than the above-mentioned range, the solution viscosity tends to be increased, whereas when the molecular weight of the polybutadiene (B) is less than the above-mentioned range, a problem on productivity may be occurred.

The molecular weight distribution (Mw/Mn) of the polybutadiene (B) is preferably 5.0, is more preferably 1.5 to 5.0, and is more preferably 1.5 to 4.5. By controlling the molecular weight distribution within such a range, the rubber particle diameter in a case where it is used as a modifier of the styrene resin can be easily controlled, and also a particle diameter size can be uniformed.

The 5 wt% styrene solution viscosity (St-cp) of the polybutadiene (B) measured at 25°C is 20 to 110, and is preferably 20 to 100. The Mooney viscosity ($ML_{1+4}$) of the polybutadiene (B) measured at 100°C is 60 or less, is preferably 10 to 60, and is further preferably 20 to 50. The ratio (St-cp/$ML_{1+4}$) of the 5 wt% styrene solution viscosity (St-cp) to the Mooney viscosity ($ML_{1+4}$) measured at 100°C of the polybutadiene (B) is 1.0 to 2.5, and is preferably 1.1 to 2.0, and is more preferably 1.2 to 1.7.

While each of the parameters of polybutadiene (B) selected from (Mn), (Mw), (Mw/Mn), (St-cp), ($ML_{1+4}$) and (St-cp/$ML_{1+4}$) should be within the respective range provided above for the reasons explained in the previous paragraphs, the rubber composition of the invention must comprise the polybutadiene (B) having the ranges of these parameters as provided in the attached claims.

**Rubber composition**

The rubber composition according to the present invention includes a polybutadiene (A) and a polybutadiene (B). Thus, by blending the polybutadiene (A) produced by a metallocene catalyst with the hyperbranched polybutadiene (B), the cold flow can be improved and the solution viscosity can be reduced. The improvement in the cold flow allows the handling ability, workability and shape retention to be improved, and the reduction in the solution viscosity allows the controllability of the rubber particle diameter to be improved.

The compounding amount of the polybutadiene (A) is 20 to 90 wt% with respect to the whole rubber composition, is preferably 30 to 90 wt%, and is more preferably 40 to 90 wt%. When the compounding amount of the polybutadiene (A) is less than the above-mentioned range, the impact resistance effect by the polybutadiene (A) becomes weak. When the compounding amount of polybutadiene (A) is more than the above-mentioned range, the cold flow rate becomes high and the solution viscosity also becomes high, which causes the problem in workability and shape retention.

The compounding amount of the polybutadiene (B) is 10 to 80 wt% with respect to the whole rubber composition, is preferably 10 to 70 wt%, and is more preferably 10 to 60 wt%. When the compounding amount of the polybutadiene (B) is less than the above-mentioned range, the improvement effect of the cold flow rate is decreased, the solution viscosity becomes high, which causes the problem in workability and shape retention. When the compounding amount of the polybutadiene (B) is more than the above-mentioned range, the impact resistance effect by the polybutadiene (A) becomes weak.

The rubber composition according to the present invention may consist of the polybutadiene (A) and the polybutadiene (B) (The total of the polybutadiene (A) and the polybutadiene (B) is 100 wt%), and may include another diene rubber as necessary. Example of another diene rubber include polybutadienes other than the polybutadiene (A) and the polybutadiene (B), and natural rubber. The total of the polybutadiene (A) and the polybutadiene (B) is 60 to 100 wt%, is preferably 70 to 99 wt%, is more preferably 80 to 98 wt%, is further preferably 90 to 97 wt%, and is especially preferably 95 to 96 wt%.

Examples of the method for blending the polybutadiene (A) and the polybutadiene (B) includes methods to blend the polybutadiene (A) and the polybutadiene (B) in a solid state with a roll and methods to blend the polybutadiene (A) and the polybutadiene (B) in a solution state where the polybutadiene (A) and the polybutadiene (B) are dissolved in a solvent such as toluene or cyclohexane. It is more preferable to blend them in a solution state than in a solid state.

**Styrene resin composition**

The styrene resin composition according to the present invention is a rubber reinforced styrene resin composition including a styrene resin and a rubber composition (hereinafter, abbreviated as HIPS polymer). Thus, by using a rubber composition in which solution viscosity and cold flow are improved, the handling ability, workability, shape retention, and controllability of the rubber particle diameter are improved, and a styrene resin composition having excellent impact resistance can be obtained.

The styrene resin which constitutes continuous phase of the HIPS polymer is obtained by polymerizing a styrene monomer known for producing HIPS polymer conventionally. Examples of the styrene monomer include styrene; side-chain alkyl-substituted styrenes such as $\alpha$-methyl styrene and $\alpha$-ethyl styrene; nuclear alkyl-substituted styrenes such as vinyltoluene, vinylxylene, o-t-butylstyrene, p-t-butylstyrene and p-methyl styrene; halogenated styrenes such as monochlorostyrene, dichlorostyrene, tribromostyrene and tetrabromostyrene; p-hydroxystyrene and o-methoxystyrene, and vinylnaphthalene. Above all, styrene and $\alpha$-methyl styrene are preferable, and styrene is more preferable. The styrene monomer may be used alone, or may be used in combination with two or more.

The weight average molecular weight of the styrene resin which constitutes continuous phase of the HIPS polymer is preferably $5 \times 10^4$ or more, and more preferably $10 \times 10^4$ to $40 \times 10^4$.

In 100 parts by weight of the HIPS polymer, 0.5 to 25 parts by weight of the rubber composition is preferably included, and more preferably 1 to 20 parts by weight thereof is more preferably included. When the content of the rubber composition is less than the above-mentioned range, the effect of the present invention is difficult to be obtained, and the impact resistance of the resin is increased by the increase of the content of the rubber composition. When the content amount of the rubber composition is more than the above-mentioned range, the increased viscosity easily causes difficulty in controlling the rubber particle diameter. However, it can be avoided by diluting it with a solvent.

The rubber composition is preferably dispersed in particles in the styrene resin which constitutes continuous phase of the HIPS polymer. The size (diameter) of the dispersed particle of the rubber composition is preferably 0.1 to 7.0 $\mu$m, is more preferably 0.1 to 6.0 $\mu$m, and is further preferably 0.1 to 5.0 $\mu$m. The rubber composition is bonded with styrene resin with a chemical bond such as graft bond. However the rubber composition may be stored with no chemical bond such as graft bond.

As the method for producing a HIPS polymer, a method of polymerizing a styrene monomer in the presence of a rubber composition is adopted, and bulk-polymerization method and bulk-suspension polymerization method are an economically advantageous method. The polymerization may be batch-type polymerization or continuous polymerization.

An example of the bulk-polymerization method is explained as follows. A rubber composition (1 to 25 wt%) is dissolved in a styrene monomer (99 to 75 wt%), and a solvent, a molecular weight modifier, and a polymerization initiator are added thereto in some cases, to obtain rubber particles in which the rubber composition is dispersed by converting the styrene monomer up to 10 to 40 % styrene monomer conversion. The rubber phase constitutes continuous phase until this rubber particles are produced. By further continuous polymerization, through phase transition (particulate process) in which the rubber phase becomes dispersed phase as rubber particles, the polymerization is performed up to 10 to 40 % conversion to produce a HIPS polymer.

The raw material solution mainly including a styrene monomer and a rubber composition is used for the polymerization in a complete-mixing type reactor. The complete-mixing type reactor may be a reactor to maintain the raw material solution in a uniform mixed state therein, and it is preferable to include a stirring blade having a shape of helical ribbon, double helical ribbon or anchor. A draft tube is preferably attached to the stirring blade having a shape of helical ribbon, in order to further promote upper and lower circulation in the reactor.

At the time of the production of a HIPS polymer, a styrene-butadiene copolymer, an ethylene-propylene, an ethylene-vinyl acetate, or an acrylic rubber can be used as necessary other than the above-mentioned rubber composition. A resin prepared by these methods may be blended thereto. Further, a polystyrene resin which does not include a HIPS polymer prepared by these methods may be mixed thereto to produce a HIPS polymer.

To the HIPS polymer, a known additive which can be selected from stabilizers such as antioxidants and ultraviolet absorbers, release agents, lubricants, coloring agents, various fillers and plasticizers, higher fatty acids, organic polysiloxanes, silicone oils, flame retardants, antistatic agents and foaming agents may be appropriately added as necessary during or after the production. Although the HIPS polymer can be used for known various molded articles, since it has excellent incombustibility, impact resistance and tensile strength, it is preferable for injection moldings used in electronic industrial field.

## EXAMPLES

Hereinafter, the present invention will be described in more detail with reference to the following examples, however, the present invention is not limited to these examples.

### Mooney viscosity

The Mooney viscosity ($ML_{1+4,\ 100°C}$) was measured according to JIS K6300.

### Number average molecular weight (Mn), weight average molecular weight (Mw), molecular weight distribution (Mw/Mn)

The number average molecular weight (Mn), the weight average molecular weight (Mw) and the molecular weight distribution (Mw/Mn) were calculated by a standard polystyrene calibration curve, by using HLC-8220 GPC (trade name) produced by Tosoh Corporation. The column used was Shodex GPC KF-805 L (trade name), and two columns were serially-connected. As for the measurement condition, the column temperature was 40°C in THF.

### Microstructure

The microstructure was measured by infrared absorption spectrum analysis. Specifically, it was calculated from the absorption strength ratios of 740 cm$^{-1}$ (cis-1,4-structure), 967 cm$^{-1}$ (trans-1,4-structure) and 910 cm$^{-1}$ (vinyl-1,2-structure).

### Cold flow rate

With respect to the cold flow rate (CF), the polymer was kept at 50°C and was aspirated by a glass tube having a 6.4 mm inner diameter under 180 mmHg of differential pressure for ten minutes, and the amount of the aspirated polymer was measured to measure the amount of the aspirated polymer per 1 minute.

### Styrene solution viscosity

With respect to the styrene solution viscosity (St-cp), 5 g of the polymer was dissolved in 95 g of styrene monomer, and the solution viscosity (unit: centipoise (cp)) was measured at 25°C.

**Rubber particle diameter**

With respect to the rubber particle diameter, only the portion of the polystyrene which is a matrix of the styrene resin composition (HIPS polymer) was dissolved in dimethylformamide. A part of the solution was dispersed in an electrolytic solution including solvent dimethylformamide and dispersant ammonium thiocyanate by using a coulter counter device made by Beckman Coulter (trade name: Multisizer III), to calculate the volume average particle diameter and the half width of the rubber particle.

**Graft ratio**

1 g of a HIPS polymer was dissolved and swelled by adding it to 50 milliliters of a mixed liquid in methyl ethyl ketone / acetone = 1 / 1 (weight ratio) and by stirring it intensely for one hour. After precipitating the undissolved part with a centrifuge, supernatant liquid was discarded by decantation. The amount of the methyl ethyl ketone/acetone undissolved part (MEK/AC-insol.(g)) was calculated by reduced-pressure drying the methyl ethyl ketone/acetone undissolved part obtained in this manner at 50°C, by cooling it in a desiccator, and, after that, by weighting it. The graft ratio was calculated by the amount of the methyl ethyl ketone/acetone undissolved part and a rubber component amount (R(g)) calculated by the content of the rubber component.

$$\text{graft ratio} = [\text{MEK/AC-insol.(g)} - \text{R(g)}] \times 100 / \text{R(g)}$$

**Izod impact strength**

It was measured according to JIS K7110 (with notch).

**Dupont impact strength**

The Dupont impact strength was a value of 50% breaking energy measured by Dupont falling weight testing device.

**Production of polybutadiene (A)**

A 1.5 L polymerization autoclave was nitrogen-substituted, and 1 L of a raw material mixed solution (cyclohexane: 20 wt%, butadiene: 40 wt% and butene: 40 wt%) was added and stirred. Then, 19 μl of water was added and continuously stirred in 500 rpm for 30 minutes. 120 mL of hydrogen in 20°C and 1 atm was measured in a multiplication mass flow meter and was injected, and 1.6 mmol of triethyl aluminum (TEA) was subsequently added. After having stirred it for five minutes, 6.8 μmol of vanadiumoxy(cyclopentadienyl) dichloride (CpV(O)Cl$_2$) and 10.2 μmol of triphenylcarbenium tetrakis(pentafluorophenyl) borate (Ph$_3$CB(C$_6$F$_5$)$_4$) were added as a toluene solution in order, and the polymerization was performed at the polymerization temperature of 50°C in 500 rpm for 30 minutes. Then, 0.2355 mmol of 4,6-bis(octylmethyl)-o-cresol (cas-number:110553-27-0) was added and was stirred for one minute. Subsequently, 6 mL of water was added as a reaction terminator and was stirred in 700 rpm for one minute with helical-typed stirring wing. After that, the solvent and the water were evaporated and dried to obtain a polybutadiene (A). Properties of the polybutadiene are shown in TABLE 1.

**Productions of polybutadienes (B-1) to (B-3)**

1.0 L of polymerization solution (1,3-butadiene: 30.0 wt%, cyclohexane: 70.0 wt%) that was previously dehydrated using molecular sieves was added to a 1.5 L stainless-steel reactor tank (tank diameter: 0.08m) with stirrer (stirring blade diameter: 0.06 m) which was substituted with nitrogen gas. Then, during stirring, water, diethylaluminum chloride, cyclooctadiene and cobalt octoate were added, and cis-1,4 polymerization was performed. After adding ethanol including 4,6-bis(octylthioethyl)-o-cresol to terminate the polymerization, unreacted butadiene and 2-butenes were evaporated and removed, and the solvent and the water were evaporated and dried to obtain polybutadienes (B-1) to (B-3). Properties of the polybutadienes are shown in TABLE 1. Note that, the polybutadienes (B-1) to (B-3) show difference in properties by changing the ratio of added materials.

**Polybutadiene (B-4)**

The commercial low-cis polybutadiene having properties shown in TABLE 1 was used.

**Example 1**

A rubber composition was produced by blending 80 wt% of the polybutadiene (A) to 20 wt% of the polybutadiene (B-1). The cold flow rate (CF) and the styrene solution viscosity (St-cp) of the provided rubber composition are shown in TABLE 2.

**Example 2**

A rubber composition was produced by blending 60 wt% of the polybutadiene (A) to 40 wt% of the polybutadiene (B-1). The cold flow rate (CF) and the styrene solution viscosity (St-cp) of the provided rubber composition are shown in TABLE 2.

**Example 3**

A rubber composition was produced by blending 50 wt% of the polybutadiene (A) to 50 wt% of the polybutadiene (B-1). The cold flow rate (CF) and the styrene solution viscosity (St-cp) of the provided rubber composition are shown in TABLE 2.

**Example 4**

A rubber composition was produced by blending 30 wt% of the polybutadiene (A) to 70 wt% of the polybutadiene (B-1). The cold flow rate (CF) and the styrene solution viscosity (St-cp) of the provided rubber composition are shown in TABLE 2.

**Example 5**

A rubber composition was produced by blending 80 wt% of the polybutadiene (A) to 20 wt% of the polybutadiene (B-2). The cold flow rate (CF) and the styrene solution viscosity (St-cp) of the provided rubber composition are shown in TABLE 3.

**Example 6**

A rubber composition was produced by blending 60 wt% of the polybutadiene (A) to 40 wt% of the polybutadiene (B-2). The cold flow rate (CF) and the styrene solution viscosity (St-cp) of the provided rubber composition are shown in TABLE 3.

**Example 7**

A rubber composition was produced by blending 50 wt% of the polybutadiene (A) to 50 wt% of the polybutadiene (B-2). The cold flow rate (CF) and the styrene solution viscosity (St-cp) of the provided rubber composition are shown in TABLE 3.

**Comparative Example 1**

A rubber composition was produced by blending 10 wt% of the polybutadiene (A) to 90 wt% of the polybutadiene (B-1). The cold flow rate (CF) and the styrene solution viscosity (St-cp) of the provided rubber composition are shown in TABLE 2.

**Comparative Example 2**

The cold flow rate (CF) and the styrene solution viscosity (St-cp) of only the polybutadiene (A) without blending the polybutadiene (B) are shown in TABLES 2 to 4.

### Comparative Example 3

The cold flow rate (CF) and the styrene solution viscosity (St-cp) of only the polybutadiene (B-1) without blending the polybutadiene (A) are shown in TABLE 2.

### Comparative Example 4

The cold flow rate (CF) and the styrene solution viscosity (St-cp) of only the polybutadiene (B-2) without blending the polybutadiene (A) are shown in TABLE 3.

### Comparative Example 5

A rubber composition was produced by blending 50 wt% of the polybutadiene (A) to 50 wt% of the polybutadiene (B-3). The cold flow rate (CF) and the styrene solution viscosity (St-cp) of the provided rubber composition are shown in TABLE 4.

### Comparative Example 6

The cold flow rate (CF) and the styrene solution viscosity (St-cp) of only the polybutadiene (B-3) without blending the polybutadiene (A) are shown in TABLE 4.

TABLE 1

|  | microstructure (mol%) | | | $ML_{1+4}$ | St-cp | $St\text{-}cp/ML_{1+4}$ | Mn (x$10^4$) | Mw (x$10^4$) | Mw/Mn |
|  | Cis | Trans | Vinyl | | | | | | |
|---|---|---|---|---|---|---|---|---|---|
| polybutadiene (A) | 86.6 | 1.6 | 12.2 | 30.9 | 102 | 3.30 | 20.9 | 44.1 | 2.11 |
| polybutadiene (B-1) | 96.1 | 2.2 | 1.8 | 27.1 | 37 | 1.37 | 12.2 | 36.8 | 3.03 |
| polybutadiene (B-2) | 96.9 | 1.5 | 1.5 | 41.2 | 60 | 1.57 | 15.8 | 46.7 | 2.95 |
| polybutadiene (B-3) | 97.8 | 1.1 | 1.1 | 43.9 | 143 | 3.25 | 20.9 | 48.9 | 2.34 |
| polybutadiene (B-4) | 34.5 | 51.0 | 14.5 | 47.0 | 177 | 3.77 | 19.4 | 43.8 | 2.26 |

TABLE 2

|  |  | Ex. | | | | Comp. Ex. | | |
|  |  | 1 | 2 | 3 | 4 | 1 | 2 | 3 |
|---|---|---|---|---|---|---|---|---|
| polybutadiene (A) | wt% | 80 | 60 | 50 | 30 | 10 | 100 | 0 |
| polybutadiene (B-1) | wt% | 20 | 40 | 50 | 70 | 90 | 0 | 100 |
| CF | g/10min | 0.34 | 0.24 | 0.22 | 0.18 | 0.14 | 0.45 | 0.18 |
| St-cp |  | 83 | 69 | 65 | 52 | 43 | 102 | 37 |

TABLE 3

|  |  | Ex. | | | Comp. Ex. | |
|  |  | 5 | 6 | 7 | 2 | 4 |
|---|---|---|---|---|---|---|
| polybutadiene (A) | wt% | 80 | 60 | 50 | 100 | 0 |
| polybutadiene (B-2) | wt% | 20 | 40 | 50 | 0 | 100 |
| CF | g/10min | 0.32 | 0.17 | 0.16 | 0.45 | 0.08 |
| St-cp |  | 94 | 85 | 76 | 102 | 60 |

TABLE 4

| | | Comp. Ex. | | |
|---|---|---|---|---|
| | | 5 | 2 | 6 |
| polybutadiene (A) | wt% | 50 | 100 | 0 |
| polybutadiene (B-3) | wt% | 50 | 0 | 100 |
| CF | g/10min | 0.25 | 0.45 | 0.17 |
| St-cp | | 119 | 102 | 143 |

**Example 8**

A 1 L separable flask with stirrer was substituted with nitrogen gas, and 368 g of styrene and 32 g of a rubber composition were added to be dissolved. Note that, the rubber composition used was a composition consisting of 90 wt% of the polybutadiene (A) and 10 wt% of the polybutadiene (B-1). Then, 0.08 wt% of n-dodecyl mercaptan was added and preliminarily polymerized for 90 minutes up to 30 % styrene conversion with stirring it at 130°C. Subsequently, a 0.5 wt% polyvinyl alcohol aqueous solution was added to the provided preliminary-polymerized liquid as much amount as the preliminary-polymerized liquid, and 0.20 part by weight of benzoyl peroxide and 0.15 part by weight of dicumyl peroxide were added therein, and the polymerizations were continuously performed at 100°C for two hours, at 125°C for three hours, and at 140°C for two hours with stirring. A beads-shaped polymer was filtered from the polymerization reaction mixture which was cooled to room temperature, was washed with water and was dried. The provided polymer was pelletized with an extruder, and a styrene resin composition was obtained. The provided styrene resin composition was injection-molded to produce a specimen for measuring properties, and the properties were measured. The rubber particle diameter, the graft ratio, the Izod impact strength and the Dupont impact strength of the provided styrene resin composition are shown in TABLE 5.

**Example 9**

A styrene resin composition was produced and properties were measured in a manner similar to Example 8 except that a rubber composition including 60 wt% of the polybutadiene (A) and 40 wt% of the polybutadiene (B-1) was used. The rubber particle diameter, the graft ratio, the Izod impact strength and the Dupont impact strength of the provided styrene resin composition are shown in TABLE 5.

**Example 10**

A styrene resin composition was produced and properties were measured in a manner similar to Example 8 except that a rubber composition including 50 wt% of the polybutadiene (A) and 50 wt% of the polybutadiene (B-1) was used. The rubber particle diameter, the graft ratio, the Izod impact strength and the Dupont impact strength of the provided styrene resin composition are shown in TABLE 5.

**Example 11**

A styrene resin composition was produced and properties were measured in a manner similar to Example 8 except that a rubber composition including 40 wt% of the polybutadiene (A) and 60 wt% of the polybutadiene (B-1) was used. The rubber particle diameter, the graft ratio, the Izod impact strength and the Dupont impact strength of the provided styrene resin composition are shown in TABLE 5.

**Example 12**

A styrene resin composition was produced and properties were measured in a manner similar to Example 8 except that a rubber composition including 20 wt% of the polybutadiene (A) and 80 wt% of the polybutadiene (B-1) was used. The rubber particle diameter, the graft ratio, the Izod impact strength and the Dupont impact strength of the provided styrene resin composition are shown in TABLE 5.

**Example 13**

A styrene resin composition was produced and properties were measured in a manner similar to Example 8 except that a rubber composition including 50 wt% of the polybutadiene (A) and 50 wt% of the polybutadiene (B-2) was used. The rubber particle diameter, the graft ratio, the Izod impact strength and the Dupont impact strength of the provided styrene resin composition are shown in TABLE 5.

**Comparative Example 7**

A styrene resin composition was produced and properties were measured in a manner similar to Example 8 except that the polybutadiene (A) was used instead of the rubber composition. The rubber particle diameter, the graft ratio, the Izod impact strength and the Dupont impact strength of the provided styrene resin composition are shown in TABLE 5.

**Comparative Example 8**

A styrene resin composition was produced and properties were measured in a manner similar to Example 8 except that the polybutadiene (B-1) was used instead of the rubber composition. The rubber particle diameter, the graft ratio, the Izod impact strength and the Dupont impact strength of the provided styrene resin composition are shown in TABLE 5.

**Comparative Example 9**

A styrene resin composition was produced and properties were measured in a manner similar to Example 8 except that a rubber composition including 50 wt% of the polybutadiene (A) and 50 wt% of the polybutadiene (B-3) was used. The rubber particle diameter, the graft ratio, the Izod impact strength and the Dupont impact strength of the provided styrene resin composition are shown in TABLE 5.

**Comparative Example 10**

A styrene resin composition was produced and properties were measured in a manner similar to Example 8 except that the polybutadiene (B-4) was used instead of the rubber composition. The rubber particle diameter, the graft ratio, the Izod impact strength and the Dupont impact strength of the provided styrene resin composition are shown in TABLE 5.

TABLE 5

| | | Ex. | | | | | | Comp. Ex. | | | |
|---|---|---|---|---|---|---|---|---|---|---|---|
| | | 8 | 9 | 10 | 11 | 12 | 13 | 7 | 8 | 9 | 10 |
| polybutadiene (A) | wt% | 90 | 60 | 50 | 40 | 20 | 50 | 100 | | 50 | |
| polybutadiene (B-1) | wt% | 10 | 40 | 50 | 60 | 80 | | | 100 | | |
| Polybutadiene (B-2) | wt% | | | | | | 50 | | | | |
| polybutadiene (B-3) | wt% | | | | | | | | | 50 | |
| polybutadiene (B-4) | wt% | | | | | | | | | | 100 |
| rubber particle diameter | μm | 2.4 | 2.3 | 2.1 | 2.2 | 2.3 | 2.3 | 2.1 | 2.2 | 2.3 | 2.6 |
| rubber particle diameter half width | μm | 1.4 | 1.0 | 1.1 | 1.1 | 1.3 | 1.5 | 1.6 | 1.2 | 1.5 | 2.4 |
| graft ratio | % | 224 | 218 | 221 | 202 | 208 | 190 | 228 | 189 | 185 | 237 |
| Izod impact strength | Kgf·cm/cm | 10.7 | 12.1 | 12.2 | 12.7 | 13.2 | 13.3 | 9.9 | 13.6 | 11.3 | 9.6 |
| Dupont impact strength | Kgf·cm | 27.1 | 25.0 | 27.8 | 23.8 | 20.8 | 23.0 | 24.5 | 18.3 | 21.5 | 20.5 |
| Izod INDEX | | 108 | 122 | 123 | 128 | 133 | 134 | 100 | 137 | 114 | 97 |
| Dupont INDEX | | 111 | 102 | 113 | 97 | 85 | 94 | 100 | 75 | 88 | 84 |
| arithmetic average | | 109 | 112 | 118 | 113 | 109 | 114 | 100 | 106 | 101 | 90 |

In TABLE 5, "Izod INDEX" and "Dupont INDEX" respectively show an Izod impact strength and a Dupont impact strength when the Izod impact strength and the Dupont impact strength in Comparative Example 7 are 100. Also, "arithmetic average" is a value calculated in a calculating formula of [(Izod INDEX) + (Dupont INDEX)] / 2.

According to the above-mentioned results, it is understood that a styrene resin composition having excellent balance of impact strength can be obtained by using 20 to 90 wt% of the polybutadiene (A) and 10 to 80 wt% of the polybutadiene (B). When the ratio of the polybutadiene (B) is increased, the Izod impact strength tends to be increased, and when the ratio of the polybutadiene (A) is increased, the Dupont impact strength tends to be increased, thus a compounding ratio of the polybutadiene (A) and the polybutadiene (B) can be set in consideration of the purpose and the usage. For example, styrene resin compositions which have an excellent Izod impact strength are suitable for housing applications of home electric appliances such as televisions, air-conditioners, refrigerators, facsimiles, and telephones, and for injection-molded applications used in industrial fields. Styrene resin compositions which have an excellent Dupont impact strength are suitable for film/seat applications used for wrapping materials, food containers and the like.

The rubber composition according to the present invention can be widely used for housing home electric and industrial application such as televisions, air-conditioners, refrigerators, facsimiles, and telephones, and for film/seat applications used for wrapping materials and food containers. Further, the rubber composition according to the present invention can be used for automobile tires applications and for non-tires applications such as golf balls and shoe soles.

**Claims**

1. A rubber composition comprising:

   20 to 90 wt% of a polybutadiene (A) produced by a metallocene catalyst, having:

   (a1) a cis-1,4-structure in microstructure being 65 to 95 mol%,
   (a2) a vinyl-1,2-structure in microstructure being 4 to 30 mol%, and
   (a3) a weight average molecular weight (Mw) being $2 \times 10^5$ to $1 \times 10^6$; and

   10 to 80 wt% of another polybutadiene (B) having:

   (b1) a Mooney viscosity ($ML_{1+4, \, 100°C}$) being 27.1 to 60,
   (b2) a 5 wt% styrene solution viscosity (St-cp) being 37 to 110,
   (b3) a ratio (St-cp/$ML_{1+4}$) of the 5 wt% styrene solution viscosity to the Mooney viscosity being 1.37 to 2.5,
   (b4) a number average molecular weight (Mn) in terms of polystyrene being $1.22 \times 10^5$ to $3 \times 10^5$;
   (b5) a weight average molecular weight (Mw) being $3.68 \times 10^5$ to $6 \times 10^5$; and
   (b6) a molecular weight distribution (Mw/Mn) being 1.5 to 3.03;

   wherein a total of the polybutadiene (A) and the polybutadiene (B) is 60 to 100 wt%.

2. The rubber composition according to claim 1, wherein the metallocene catalyst is a catalyst which consists of: (A1) a metallocene complex of vanadium metal, and (A2) an ionic compound of a non-coordinating anion and a cation and/or an alumoxane.

3. A styrene resin composition comprising the rubber composition according to one of claims 1 or 2 and a styrene resin.

4. The styrene resin composition according to claim 3, wherein the rubber composition in the styrene resin composition has a particle diameter being 0.1 to 5.0 $\mu$m.

5. The styrene resin composition according to claim 3 or 4, wherein the rubber composition is chemically bonded to the styrene resin.

**Patentansprüche**

1. Kautschukzusammensetzung umfassend:

   20 bis 90 Gew.-% eines durch einen Metallocen-Katalysator hergestellten Polybutadiens (A) mit:

(a1) eine cis-1,4-Struktur in der Mikrostruktur von 65 bis 95 Mol-%,
(a2) eine Vinyl-1,2-Struktur in der Mikrostruktur von 4 bis 30 Mol-% und
(a3) einem gewichtsmittleren Molekulargewicht (Mw) von $2x10^5$ bis $1x10^6$; und

10 bis 80 Gew.-% eines anderen Polybutadiens (B) mit:

(b1) einer Mooney-Viskosität ($ML_{1+4, 100°c}$) von 27,1 bis 60,
(b2) einer Viskosität der 5 Gew.-% Styrollösung (St-cp) von 37 bis 110,
(b3) einem Verhältnis (St-cp/$ML_{1+4}$) der Viskosität der 5 Gew.-% Styrollösung zur Mooney-Viskosität von 1,37 bis 2,5,
(b4) einem zahlengemittelten Molekulargewicht (Mn) bezüglich Polystyrol von $1,22x10^5$ bis $3x10^5$; und
(b5) einem gewichtsmittleren Molekulargewicht (Mw) von $3,68x10^5$ bis $6x10^5$; und
(b6) eine Molekulargewichtsverteilung (Mw/Mn) von 1,5 bis 3,03;

wobei die Gesamtmenge des Polybutadiens (A) und des Polybutadiens (B) 60 bis 100 Gew.-% beträgt.

2. Kautschukzusammensetzung nach Anspruch 1, wobei der Metallocen-Katalysator ein Katalysator, der aus: (A1) einen Metallocen-Komplex von Vanadiummetall und (A2) einer ionischen Verbindung eines nicht-koordinierenden Anions und eines Kations und/oder eines Alumoxans besteht, ist.

3. Styrolharzzusammensetzung umfassend die Kautschukzusammensetzung nach einem der Ansprüche 1 oder 2 und ein Styrolharz.

4. Styrolharzzusammensetzung nach Anspruch 3, wobei die Kautschukzusammensetzung in der Styrolharzzusammensetzung einen Teilchendurchmesser von 0,1 bis 5,0 μm aufweist.

5. Styrolharzzusammensetzung nach Anspruch 3 oder 4, wobei die Kautschukzusammensetzung chemisch an das Styrolharz gebunden ist.

**Revendications**

1. Une composition de caoutchouc comprenant :

20 à 90% en poids d'un polybutadiène (A) produit par un catalyseur métallocène, ayant :

(a1) une structure cis-1,4 en microstructure comprise entre 65 et 95% en mole,
(a2) une structure vinyl-1,2 en microstructure comprise entre 4 et 30% en mole, et
(a3) une masse moléculaire moyen en poids (Mw) comprise entre $2xl0^5$ et $1x10^6$; et

10 à 80% en poids d'un autre polybutadiène (B) ayant :

(b1) une viscosité Mooney ($ML_{1+4, 100°c}$) comprise entre 27,1 et 60,
(b2) une viscosité de la solution de styrène à 5% en poids (St-cp) comprise entre 37 et 110,
(b3) un rapport (St-cp/$ML_{1+4}$) de la viscosité de la solution de styrène à 5% en poids à la viscosité Mooney compris entre 1,37 et 2,5,
(b4) une masse moléculaire moyen en nombre (Mn) en termes de polystyrène comprise entre $1,22x10^5$ et $3x10^5$;
(b5) une masse moléculaire moyen en poids (Mw) comprise entre $3,68x10^5$ et $6x10^5$; et
(b6) une distribution de masse moléculaire (Mw / Mn) comprise entre 1,5 et 3,03;

où un total du polybutadiène (A) et du polybutadiène (B) est compris entre 60 et 100% en poids.

2. La composition de caoutchouc selon la revendication 1, où le catalyseur métallocène est un catalyseur qui est composé de: (A1) un complexe métallocène de vanadium métallique et (A2) un composé ionique d'un anion non-coordinant et d'un cation et/ou d'un alumoxane.

3. Une composition de résine de styrène comprenant la composition de caoutchouc selon l'une des revendications 1 ou 2 et une résine de styrène.

4. La composition de résine de styrène selon la revendication 3, où la composition de caoutchouc dans la composition de résine de styrène a un diamètre de particule compris entre 0,1 et 5,0 μm.

5. La composition de résine de styrène selon la revendication 3 ou 4, où la composition de caoutchouc est liée chimiquement à la résine de styrène.

**EP 2 993 207 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9291108 A
- JP 9324009 A
- JP 9302035 A
- JP 3982203 B
- WO 2011102518 A